# EUROPEAN PATENT SPECIFICATION

(11) **EP 2 165 874 B1**
(45) Date of publication and mention of the grant of the patent: **20.03.2013**
(21) Application number: 09169760.7
(22) Date of filing: 08.09.2009
(51) Int. Cl.: B60K 15/04

(54) **Connection and removal prevention device, particularly for connecting an antitheft device to a fuel tank**
Anschluss- und Entfernungsverhinderungsvorrichtung, insbesondere zum Anschließen einer Diebstahlschutzvorrichtung an einen Kraftstofftank
Dispositif de connexion et de prévention du retrait, en particulier pour la connexion d'un dispositif antivol à un réservoir de carburant

(30) Priority: 22.09.2008 IT TV20080120
(43) Date of publication of application: 24.03.2010
(73) Proprietor: Lago Accessori S.r.l., 35014 Fontaniva (PD) (IT)
(72) Inventor: Lago, Fabio, 35013 Cittadella PD (IT); Canton, Cristian Antonio, 35014 Fontaniva PD (IT)
(74) Representative: Modiano, Micaela Nadia

(56) References cited:
- WO-A-2007/122301
- US-A- 1 931 335
- US-A- 2 107 600
- US-A- 2 145 759
- US-A- 2 313 266

## Description

The present invention relates to a connection and removal prevention device, particularly for connecting an antitheft device to a fuel tank.

Currently it is known to provide antitheft solutions adapted to prevent the drawing of diesel fuel: these are of a mechanical type, in which substantially one chooses to try to minimize the cross-section for entry into the tank in order to hinder the insertion therein of flexible hoses that are adapted to extract the fuel.

In such known solutions, an attempt is made to prevent access to the tank by using a ring that is provided with a tube, which is located between the inlet of the refueling adapter and the inside of the tank and contains a perforated metallic mesh or a web of laminae, also arranged on multiple levels and mutually staggered.

These solutions, which therefore substantially consist in using a mechanical obstruction, while allowing a sufficient level of hindrance, have a drawback: the ring is in fact associated with the refueling adapter by means of screws, which however can be removed and therefore can make it possible to extract the antitheft device.

Other solutions provide for coupling systems that use metallic elements to be deformed, such as for example metallic tabs, or perforation and riveting of the ring onto the adapter or onto the body of the tank.

All these known systems require more or less time-consuming operations and specific equipment, and in any case allow equipped individuals with bad intentions to remove the antitheft device nonetheless.

The aim of the present invention is to solve the described technical problems, eliminating the drawbacks of the cited background art, by providing a device that makes it possible to avoid the removal of antitheft devices adapted to prevent the drawing of fuel from tanks of vehicles.

Within this aim, an object of the invention is to provide a device that makes it possible to avoid, rapidly and simply, the removal of antitheft devices.

Another object is to provide a device that is structurally simple and has low manufacturing costs.

US-A-2 145 759, which represents the closest prior art, discloses a antisiphon device for fuel tanks providing an attachment permanently fixed to the neck of the tank to prevent the siphoning of fuel therefrom. The antisiphon device comprises a perforated tube with a perforated bottom and an open upper end provided with a cap flange which rests upon the upper edge of the neck of the tank when the tube of the device is inserted downwardly in the neck of the tank. Locking lugs protrude outwardly from the tube which upon the insertion of the tube in the neck will enter cut-out portions of a flange formed by an upper edge of the neck bent inwardly and downwardly therefrom, the locking lugs engaging under the flange upon a turning movement of the device. A spring-like locking tongue is also provided protruding from the tube and adapted to have its side edge ride over an eccentrically curved edge of cam tongues formed on the neck flange by a turning movement of the cap flange so that the device will be locked in position.

In accordance with the invention, there is provided a connection and removal prevention device as defined in the appended claims.

Further characteristics and advantages of the invention will become better apparent from the following detailed description of a particular but not exclusive embodiment thereof, illustrated by way of non-limiting example in the accompanying drawings, wherein:
Figure 1 is a partially sectional side perspective view of a device according to the invention;

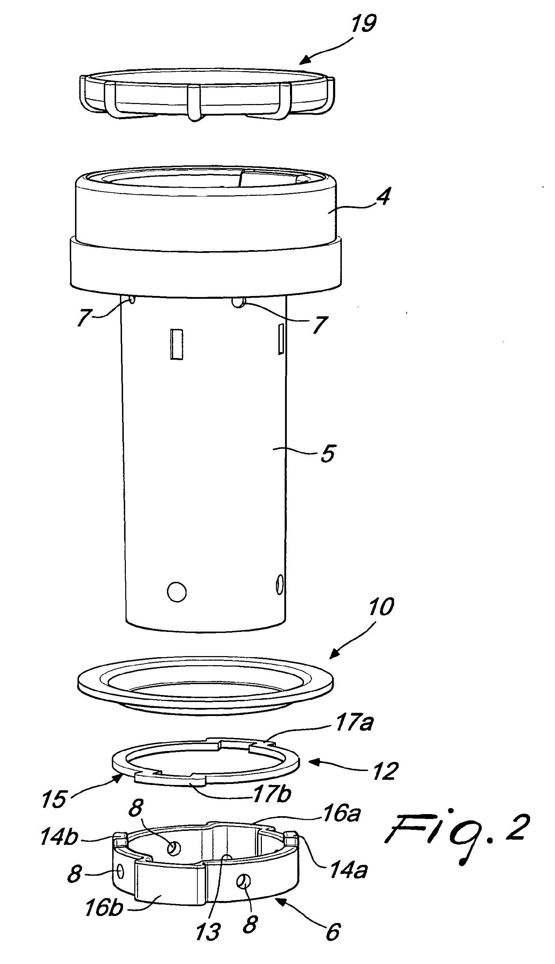

Figure 2 is an exploded view of some details of the device;
Figure 3 is a partially sectional side perspective view of the device in the initial step in which the antitheft device is arranged within the end adapter of the fuel tank;
Figure 4 is a sectional view, taken along the line IV-IV of Figure 3;
Figure 5 is a partially sectional side perspective view of the device in the step in which the first and second rings are turned clockwise so as to allow rotary mating with the adapter;
Figure 6 is a partially sectional side perspective view of the device in the step in which the second ring has been imparted a further rotation with respect to the one indicated in Figure 5;
Figure 7 is a partially sectional side perspective view of the device in the step in which the rotation of the second ring has placed the engagement means at the complementarily shaped coupling means provided on the overlying third ring;
Figure 8 is a partially sectional side perspective view of the device in the step in which the third ring is allowed to perform the axial movement that causes the mutual interaction of the coupling means and the selective engagement means provided on the underlying second ring;
Figure 9 is a sectional view, taken along the line IX-IX of Figure 8.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

With reference to the figures, the reference numeral 1 designates a connection and removal prevention device, particularly for connecting an antitheft device 2 to a fuel tank (not shown) to which an end adapter 3 for introducing the fuel is welded.

The device 1 comprises means adapted to allow, once the antitheft device 2 has been inserted and rotated partially within the adapter 3, non-removable interconnection with respect to the adapter 3.

Such means comprise a first ring 4, which is fixed and jointly connected both to a tube 5, which protrudes downward and axially from it, and to a second ring 6, which is arranged coaxially to the tube 5 and is coupled thereto by means of appropriately provided screws or rivets (not shown) which act within appropriately provided first holes 7 and second holes 8 formed respectively in the lateral surfaces of the tube 5 and of the second ring 6.

A first gasket 10, advantageously of the cup-shaped type, is interposed between the lower surface 9, which is annular, of the first ring 4 and the underlying second ring 6, which gasket, in the condition in which the connection and removal prevention device 1 is inserted in the adapter 3 interacts partially with the upper surface 11 of the adapter 3.

The first gasket 10 also interacts, in the central region that does not interact with the surface 11, with an underlying third ring 12, which can be arranged above the underlying second ring 6, which can rotate with respect to the third ring 12.

The second ring 6 and the third ring 12 have an approximately identical outside diameter, the sliding of the third ring 12 with respect to the second underlying ring 6 being allowed by way of the fact that two lugs 14a and 14b protrude diametrically from the upper perimetric edge 13 of the second ring 6 and slide at the overlying lower perimetric surface 15 of the third ring 12.

Therefore, a rotation imparted to the first ring 4 and therefore also consequently to the second ring 6 is not followed by an equal rotation of the third ring 12, which is instead kept in a non-rotating position, as specified hereinafter.

The second ring 6 has a pair of first tabs 16a and 16b, which protrude radially and diametrically and are adapted, during rotation, to engage appropriately provided interconnection means which are present at the adapter 3 and adapted to prevent the axial extraction of the second ring 6.

Second tabs 17a and 17b are also present at the third ring 12 and also protrude radially and diametrically and have a plan shape that is approximately equal to the plan shape of the first tabs 16a and 16b, constituting further engagement means for the lugs 14a and 14b by being shaped complementarily thereto.

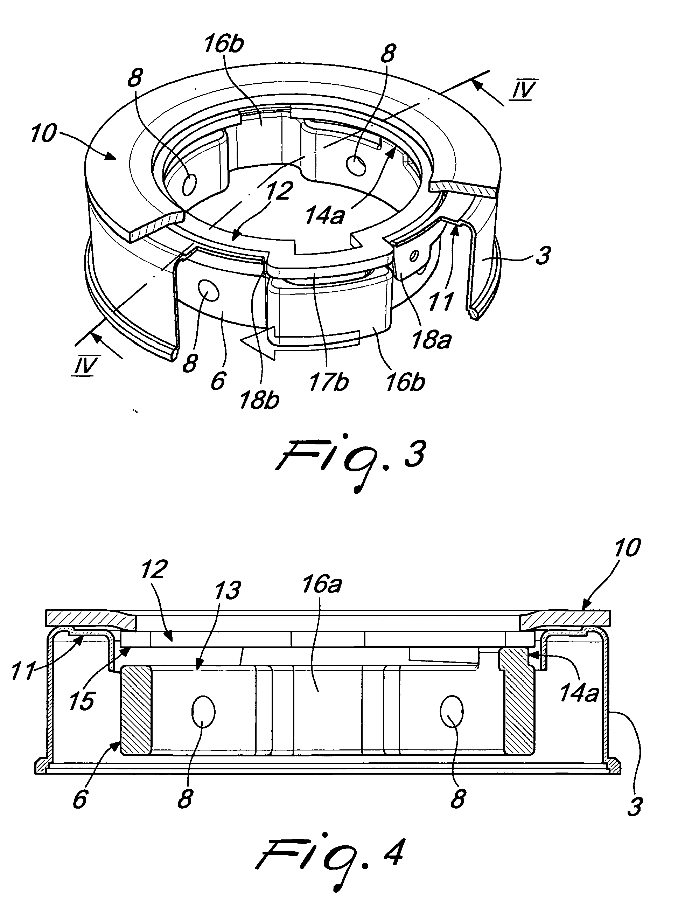

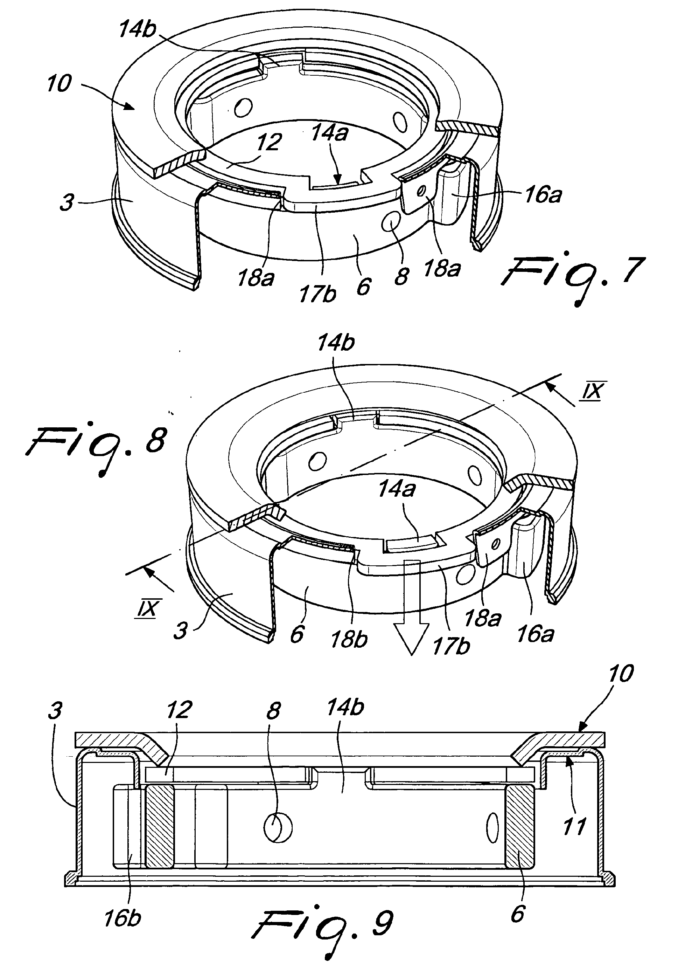

The adapter 3 further has appropriately provided wings 18a and 18b which are coaxial and face the outer lateral surface of the second ring 6; the wing 18a prevents counterclockwise rotation of the first and second tabs 16a, 16b, 17a, 17b, whereas the wing 18b allows clockwise rotation only to the first tab 16b of the second ring 6 whereas it blocks the rotation of the second tab 17b of the third ring 12. This occurs both in the raised condition in Figure 3 and in the lowered condition in Figure 8.

A second gasket 19 is associable with the first ring 4 on the opposite side with respect to the tube 5.

The use of the connection and removal prevention device 1 is therefore as follows: after gripping the first ring 4 applied to the connection and removal prevention device 1, the antitheft device 2 is inserted in the adapter 3 of the tank.

In this condition, the arrangement of the second and third rings is the one shown in Figures 3 and 4.

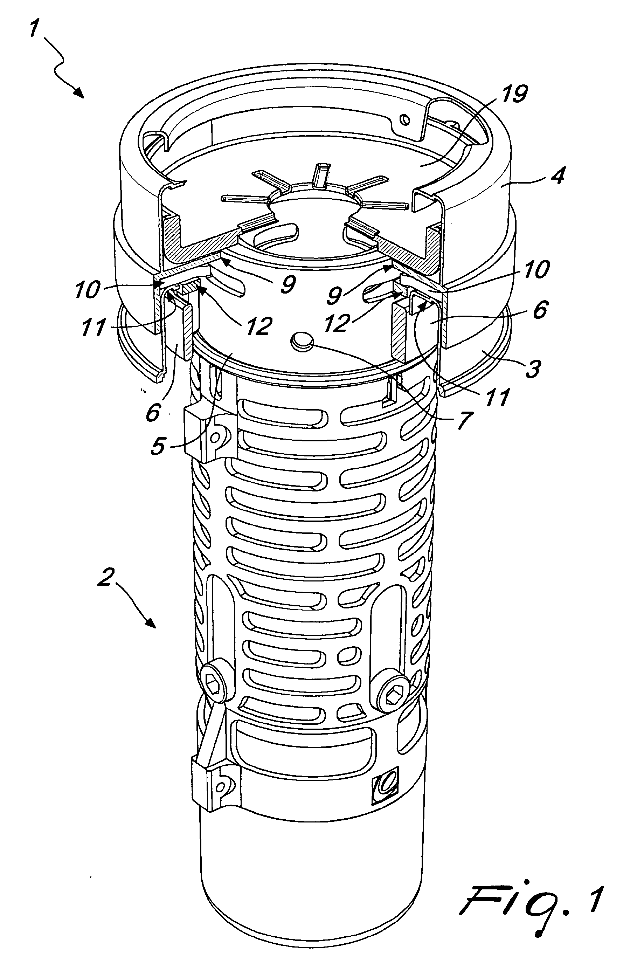

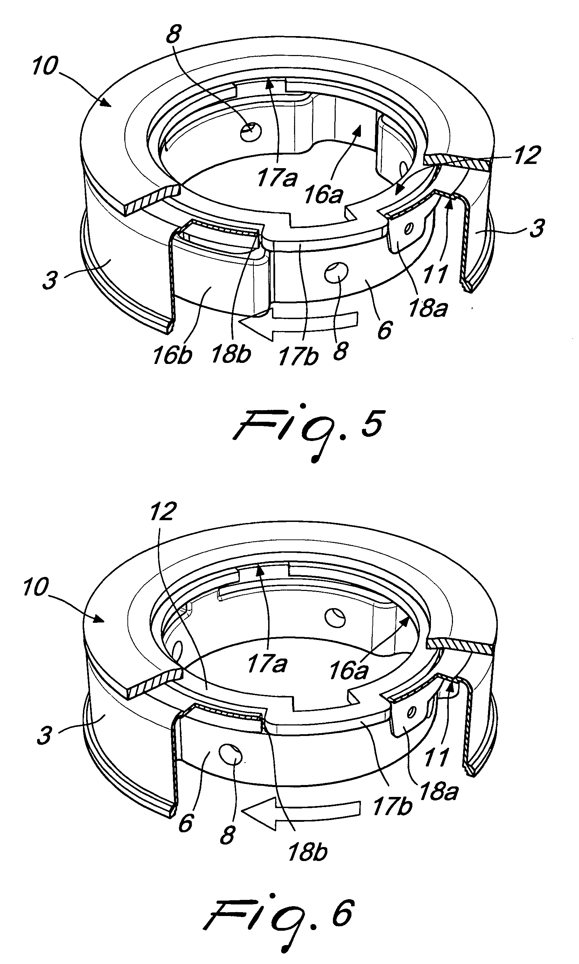

During insertion in the adapter 3, the second ring 6, as shown in Figure 1, is arranged adjacent to the adapter 3, with the first and second tabs mutually superimposed; a subsequent rotation, for example a clockwise one shown in Figure 5, imparted to the first ring 4, jointly connected to the second ring 6, is followed by the engagement of the first tabs 16a, 16b with the adapter 3, so that axial extraction of the first ring 4 is prevented.

During this rotation, which is also shown in Figure 6, the third ring 12 remains fixed and does not rotate, being supported and retained in its position by the lugs 14a, 14b that protrude from the second ring 6 and from the wings 18a, 18b.

Once a desired rotation has been performed, the condition is reached, as shown in Figure 7, in which the lugs 14a, 14b are positioned at the second tabs 17a, 17b of the overlying third ring 12: in this manner, the third ring is free to move axially and therefore descend, being propelled also by the first gasket 10, so that the second tabs 17a, 17b engage selectively the coupling means constituted by the lugs 14a, 14b, as shown in Figures 8 and 9.

By doing so, any further rotation imparted to the first ring 4, which simulates the attempt to uncouple the device 1 from the adapter 3 and therefore extract the antitheft device 2, is prevented, since the edge of the second tabs 17a, 17b interacts with the adjacent wings 18 of the adapter 3, which thus prevent the rotation of the second ring 6.

This therefore continues to prevent the axial extraction of the antitheft device 2.

It has thus been found that the invention has achieved the intended aim and objects, a device having been devised which makes it possible to avoid, rapidly and simply, the removal of antitheft devices adapted to prevent the drawing of fuel from tanks of vehicles, the device being structurally simple and having a low production cost.

The invention is of course susceptible of numerous modifications and variations, all of which are within the scope of the appended claims.

The materials used, as well as the dimensions that constitute the individual components of the invention, may of course be more pertinent according to specific requirements.

The various means for performing certain different functions certainly need not coexist only in the illustrated embodiment but can be present per se in many embodiments, even if they are not illustrated.

The characteristics indicated as advantageous, convenient or the like may also be omitted or replaced with equivalents.

The disclosures in Italian Patent Application No. TV2008A000120 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A connection and removal prevention device (1), for connecting and preventing removal of an antitheft device (2) to a fuel tank, said device (1) comprising an end adapter (3) for introducing fuel and suitable for being welded to the fuel tank, and means (4, 6) adapted to allow, once said antitheft device (2) has been inserted and partially rotated within said tank, non-removable interconnection with respect to said adapter (3), **characterized in that** said means comprise a first ring (4), which is fixed and rigidly connected to a second ring (6), with the interposition of a first gasket (10) and of a third ring (12) that can move axially, said second ring (6) having first radial tabs (16a, 16b) for rotary mating with said adapter (3) and means for selective engagement with complementarily shaped coupling means provided in said overlying third ring (12).

2. The device according to claim 1, **characterized in that** said third movable ring (12) can, upon completion of the rotation of said second ring (6) to allow mating with said adapter (3), descend axially to engage said coupling means both with said selective engagement means and with means, jointly connected to said adapter (3), that are adapted to limit the rotation of said third and first rings (4) and their uncoupling from said adapter (3).

3. The device according to claim 2, **characterized in that** said first ring (4) is fixed and jointly connected both to a tube (5), which protrudes from it in a lower region and axially, and to said second ring (6), which is arranged coaxially to said tube (5) and coupled thereto by way of screws or rivets, which act in first holes (7) and second holes (8), which are formed respectively on the lateral surfaces of said tube (5) and of said second ring (6).

4. The device according to claim 3, **characterized in that** said first gasket (10) is interposed between a lower annular surface (9) of said first ring (4) and the underlying second ring (6) and is cup-shaped, which gasket, in the condition for insertion of the connection and removal prevention device (1) in said adapter (3), interacts partially with an upper surface (11) of said adapter (3), said first gasket (10) interacting also, in the central region that does not interact with said surface (11), with said underlying third ring (12), which can be arranged above said underlying second ring (6), said second ring being allowed to rotate with respect to said third ring (12).

5. The device according to claim 4, **characterized in that** said second ring (6) and said third ring (12) have an approximately identical outside diameter, the sliding of said third ring (12) with respect to said second underlying ring (6) being allowed by way of the fact that two lugs (14a, 14b) protrude diametrically from an upper perimetric edge (13) of said second ring (6) and slide at an overlying lower perimetric surface (15) of said third ring (12).

6. The device according to claim 5, **characterized in that** a rotation imparted to said first ring (4) and therefore also consequently to said second ring (6) is not followed by an equal rotation of said third ring (12), which is instead kept in a non-rotation position.

7. The device according to claim 6, **characterized in that** said second ring (6) has a pair of first tabs (16a, 16b), which protrude radially and diametrically and are adapted, during rotation, to engage interconnection means that are present at said adapter (3) and adapted to prevent axial extraction of said second ring (6).

8. The device according to claim 7, **characterized in that** second tabs (17a, 17b) are provided at said third ring (12), also protrude radially and diametrically, have a plan shape that is approximately equal to the plan shape of said first tabs (16a, 16b), and further constitute said engagement means for said lugs (14a, 14b), being shaped complementarily thereto.

9. The device according to claim 8, **characterized in that** said adapter (3) has wings (18a and 18b) that are coaxial to, and face, the outer lateral surface of said second ring (6), said first and second tabs (16a, 16b, 17a, 17b) being arrangeable between said wings, the wing (18a) preventing counterclockwise rotation both of said first tabs (16a, 16b) and of said second tabs (17a, 17b), whereas the wing (18b) allows clockwise rotation only of the first tab (16b) of said second ring (6) and blocks the rotation of the second tab (17b) of said third ring (12), both in the raised condition and in the lowered condition.

10. The device according to claim 9, **characterized in that** once said first ring (4) has been inserted at said adapter (3) so that the first and second tabs are mutually superimposed, a subsequent rotation imparted to said first ring (4) is followed by the engagement of said first tabs (16a, 16b) with said adapter (3), so that axial extraction of said device is prevented, said third ring (12) remaining in its position until said lugs (14a, 14b) are positioned at said second tabs (17a, 17b) of said overlying third ring (12), which thus becomes free to move axially and therefore descend, being also pushed by said first gasket (10), so that said second tabs (17a, 17b) engage selectively said coupling means constituted by said lugs (14a, 14b).

11. The device according to claim 9, **characterized in that** any further rotation imparted to said first ring (4) and simulating the attempt to uncouple said device (2) from said adapter (3) and therefore extract it is prevented, since the edge of said second tabs (17a, 17b) interacts with said adjacent wings (18a and 18b) of said adapter (3), which thus prevent the rotation of said second ring (6) so as to prevent axial extraction of said device.

## Patentansprüche

1. Entfernungsverhinderungs- und Anschlussvorrichtung (1) zum Anschließen an und zum Verhindern der Entfernung einer Diebstahlschutzvorrichtung (2) von einem Kraftstofftank, wobei die Vorrichtung (1) ein End-Anschlussstück (3) zum Einfüllen von Kraftstoff, das sich zum Anschweißen an den Kraftstofftank eignet, und Mittel (4, 6) aufweist, die ausgelegt sind, um eine untrennbare Verbindung zu dem Anschlussstück (3) zu ermöglichen, wenn die Diebstahischutzvorrichtung (2) In den Tank eingesetzt und teilweise darin gedreht worden Ist, **dadurch gekennzeichnet, dass** die Mittel einen ersten Ring (4) aufweisen, der ortsfest und steif unter Einfügung einer ersten Dichtung (10) und eines dritten Ringes (12), der axial beweglich ist, mit einem zweiten Ring (6) verbunden ist, wobei der zweite Ring (6) erste radiale Laschen (16 a, 16 b) zum Rotationsfügen mit dem Anschlussstück (3) und Mittel zum selektiven Eingreifen In komplementär geformte Verblndungsmlttel, die in dem darüber liegenden dritten Ring (12) vorgesehen sind, aufweist.

2. Vorrichtung nach Anspruch 1, **dadurch gekennzeichnet, dass** der dritte bewegliche Ring (12) nach der Vollendung der Drehung des zweiten Rings (6), um das Fügen mit dem Anschlussstück (3) zu ermöglichen, axial absinken kann, um in die Verbindungsmittel sowohl mit den selektiven Eingriffsmitteln als auch mit gemeinsam mit dem Anschlussstück (3) verbundenen Mitteln, die ausgelegt sind, um die Rotation der dritten und ersten Ringe (4) und ihre Entkopplung von dem Anschlussstück (3) zu limitieren, einzugreifen.

3. Vorrichtung nach Anspruch 2, **dadurch gekennzeichnet, dass** der erste Ring (4) befestigt an und verbunden ist mit sowohl einem Rohr (5), das von ihm In der unteren Region axial hervorsteht, als auch mit bzw. an dem zweiten Ring (6), der koaxial zu dem Rohr (5) angeordnet und mit ihm mittels Schrauben oder Nieten verbunden ist, die in den ersten Löchern (7) und zweiten Löchern (8), die jeweils an den lateralen Oberflächen des Rohrs (5) und des zweiten Rings (6) ausgeformt sind, wirken.

4. Vorrichtung nach Anspruch 3, **dadurch gekennzeichnet, dass** die erste Dichtung (10) zwischen einer unteren ringförmigen Oberfläche (9) des ersten Rings (4) und dem darunter liegenden zweiten Ring (6) eingefügt und napfförmig Ist, wobei die Dichtung Im Zustand zum Einsetzen der Entfernungsverhinderungs- und Anschlussvorrichtung (1) in das Anschlussstück (3) partiell mit einer oberen Oberfläche (11) des Anschlussstücks (3) zusammenwirkt, wobei die erste Dichtung (10) außerdem in der Zentralregion, die nicht mit der Oberfläche (11) zusammenwirkt, mit dem darunter liegenden dritten Ring (12), der über dem darunter liegenden zweiten Ring (6) angeordnet werden kann, zusammenwirkt, wobei es für den zweiten Ring möglich ist, bezogen auf den dritten Ring (12) zu rotieren.

5. Vorrichtung nach Anspruch 4, **dadurch gekennzeichnet, dass** der zweite Ring (6) und der dritte Ring (12) einen ungefähr identischen Außendurchmesser aufweisen, wobei das Gleiten des dritten Rings (12) relativ zu dem darunter liegenden zweiten Ring (6) mittels zweier Nasen (14a, 14b), die diametral von einer oberen Umfangskante (13) des zweiten Rings (6) hervorstehen und an einer darüber liegenden unteren Umfangsoberfläche (15) des dritten Rings (12) entlang gleiten, ermöglicht wird.

6. Vorrichtung nach Anspruch 5, **dadurch gekennzeichnet, dass** eine auf den ersten Ring (4) und folglich auch auf den zweiten Ring (6) ausgeübte Drehung nicht von einer entsprechenden Drehung des dritten Ringes (12) gefolgt wird, welcher stattdessen in einer nicht rotierten Position gehalten wird.

7. Vorrichtung nach Anspruch 6, **dadurch gekennzeichnet, dass** der zweite Ring (6) ein paar erster Laschen (16a, 16b) aufweist, die radial und diametral hervorstehen und ausgelegt sind, um während der Drehung in Verbindungsmittel einzugreifen, die an dem Anschlussstück (3) vorgesehen und ausgelegt sind, um das axiale Herausziehen des zweiten Rings (6) zu verhindern.

8. Vorrichtung nach Anspruch 7, **dadurch gekennzeichnet, dass** an dem dritten Ring (12) zweite Laschen (17a, 17b) vorgesehen sind, die ebenfalls radial und diametral hervorstehen, eine ebene Form aufweisen, die ungefähr gleich zu der ebenen Form der ersten Laschen (16a, 16b) ist, und außerdem die Eingriffsmittel für die Nasen (14a, 14b) ausformen und komplementär zu diesen geformt sind.

9. Vorrichtung nach Anspruch 8, **dadurch gekennzeichnet, dass** das Anschlussstück (3) Flügel (18 a und 18 b) aufweist, die koaxial zu den äußeren lateralen Oberflächen des zweiten Rings (6) und diesen zugewandt sind, wobei die ersten und zweiten Laschen (16a, 16b, 17a, 17b) zwischen den Flügeln angeordnet werden können, wobei der Flügel (18a) die dem Uhrzeigersinn entgegen gesetzte Rotation sowohl der ersten Laschen (16a, 16b) als auch der zweiten Laschen (17a, 17b) verhindert, wohingegen der Flügel (18b) die Rotation im Uhrzeigersinn lediglich der ersten Lasche (16b) des zweiten Rings (6) erlaubt und die Rotation der zweiten Lasche (17b) des dritten Rings (12) sowohl Im angehobenen als auch im abgesenkten Zustand verhindert.

10. Vorrichtung nach Anspruch 9, **dadurch gekennzeichnet, dass** sobald der erste Ring (4) in den Adapter (3) eingesetzt worden Ist, so dass die ersten und zweiten Laschen sich jeweils überlagern, einer anschließenden Drehung, die auf den ersten Ring (4) ausgeübt wird, das Eingreifen der ersten Laschen (16a, 16b) in das Anschlussstück (3) folgt, so dass das axiale Herausziehen der Vorrichtung verhindert wird, wobei der dritte Ring (12) in seiner Position verbleibt bis die Nasen (14a, 14b) an den zweiten Laschen (17a, 17b) des darüber liegenden dritten Rings (12) positioniert sind, welcher dadurch frei wird, sich axial zu bewegen und somit abzusinken, wobei er ebenfalls von der ersten Dichtung (10) gedrückt wird, so dass die zweiten Laschen (17a, 17b) selektiv in die durch die Nasen (14a, 14b) dargestellten Verbindungsmittel eingreifen.

11. Vorrichtung nach Anspruch 9, **dadurch gekennzeichnet, dass** jede weitere Drehung, die auf den ersten Ring (4) ausgeübt wird und den Versuch simuliert, die Vorrichtung (2) von dem Anschlussstück (3) zu entkoppeln und somit herauszuziehen, verhindert wird, da die Kante der zweiten Laschen (17a, 17b) mit den angrenzenden Flügeln (18a, 18b) des Anschlussstückes (3) zusammenwirkt, welche dadurch die Rotation des zweiten Ringes (6) verhindern, so dass das axiale Heraufziehen der Vorrichtung verhindert wird.

## Revendications

1. Dispositif de connexion et de prévention du retrait (1) pour la connexion et la prévention du retrait d'un dispositif antivol (2) à un réservoir de carburant, ledit dispositif (1) comprenant un adaptateur d'extrémité (3) pour introduire le carburant et approprié pour être soudé au réservoir de carburant, et des moyens (4, 6) adaptés pour permettre, une fois que ledit dispositif antivol (2) a été inséré et partiellement entraîné en rotation à l'intérieur dudit réservoir, l'interconnexion non amovible par rapport audit adaptateur (3), **caractérisé en ce que** lesdits moyens comprennent une première bague (4) qui est fixée et raccordée rigidement à une deuxième bague (6), avec l'interposition d'un premier joint (10) et d'une troisième bague (12) qui peuvent se déplacer de manière axiale, ladite deuxième bague (6) ayant des premières languettes radiales (16a, 16b) pour se coupler de manière rotative avec ledit adaptateur (3) et des moyens pour la mise en prise sélective avec des moyens de couplage formés de manière complémentaire prévus dans ladite troisième bague (12) sur-jacente.

2. Dispositif selon la revendication 1, **caractérisé en ce que** ladite troisième bague mobile (12) peut, suite à l'achèvement de la rotation de ladite deuxième bague (6) pour permettre le couplage avec ledit adaptateur (3), descendre de manière axiale pour mettre en prise lesdits moyens de couplage à la fois avec lesdits moyens de mise en prise sélective et avec des moyens, raccordés de manière solidaire audit adaptateur (3), qui sont adaptés pour limiter la rotation desdites troisième et première bagues (4) et leur découplage dudit adaptateur (3).

3. Dispositif selon la revendication 2, **caractérisé en ce que** ladite première bague (4) est raccordée de manière fixe et solidaire à la fois à un tube (5) qui fait saillie de cette dernière dans une région inférieure et de manière axiale, et à ladite deuxième bague (6) qui est agencée de manière coaxiale par rapport audit tube (5) et couplée à ce dernier au moyen de vis ou de rivets, qui agissent dans les premiers trous (7) et les deuxièmes trous (8) qui sont formés respectivement sur les surfaces latérales dudit tube (5) et de ladite deuxième bague (6).

4. Dispositif selon la revendication 3, **caractérisé en ce que** ledit premier joint (10) est intercalé entre une surface annulaire inférieure (9) de ladite première bague (4) et la deuxième bague (6) sous-jacente et est formé en forme de coupe, lequel joint, dans la condition d'insertion du dispositif de connexion et de prévention du retrait (1) dans ledit adaptateur (3), interagit partiellement avec une surface supérieure (11) dudit adaptateur (3), ledit premier joint (10) interagissant également, dans la région centrale qui n'interagit pas avec ladite surface (11), avec ladite troisième bague (12) sous-jacente qui peut être agencée au-dessus de ladite deuxième bague (6) sous-jacente, ladite deuxième bague étant autorisée à tourner par rapport à ladite troisième bague (12).

5. Dispositif selon la revendication 4, **caractérisé en ce que** ladite deuxième bague (6) et ladite troisième bague (12) ont un diamètre externe approximativement identique, le coulissement de ladite troisième bague (12) par rapport à ladite deuxième bague (6) sous-jacente étant autorisé étant donné que deux pattes (14a, 14b) font saillie diamétralement d'un bord périmétral supérieur (13) de ladite deuxième bague (6) et coulissent au niveau d'une surface périmétrale inférieure (15) sur-jacente de ladite troisième bague (12).

6. Dispositif selon la revendication 5, **caractérisé en ce qu'**une rotation communiquée à ladite première bague (4) et par conséquent également à ladite deuxième bague (6) n'est pas suivie par une rotation identique de ladite troisième bague (12), qui est maintenue plutôt dans une position sans rotation.

7. Dispositif selon la revendication 6, **caractérisé en ce que** ladite deuxième bague (6) a une paire de premières languettes (16a, 16b) qui font saillie radialement et diamétralement et sont adaptées, pendant la rotation, pour mettre en prise des moyens d'interconnexion qui sont présents au niveau dudit adaptateur (3) et adaptés pour empêcher l'extraction axiale de ladite deuxième bague (6).

8. Dispositif selon la revendication 7, **caractérisé en ce que** les secondes languettes (17a, 17b) sont prévues au niveau de ladite troisième bague (12), font également saillie de manière radiale et diamétrale, ont une forme plane qui est approximativement égale à la forme plane desdites premières languettes (16a, 16b) et constituent en outre lesdits moyens de mise en prise pour lesdites pattes (14a, 14b), qui sont formées de manière complémentaire.

9. Dispositif selon la revendication 8, **caractérisé en ce que** ledit adaptateur (3) a des ailettes (18a et 18b) qui sont coaxiales à et font face à la surface latérale externe de ladite deuxième bague (6), lesdites première et seconde languettes (16a, 16b, 17a, 17b) peuvent être agencées entre lesdites ailettes, l'ailette (18a) empêchant la rotation dans le sens inverse des aiguilles d'une montre à la fois desdites premières languettes (16a, 16b) et desdites secondes languettes (17a, 17b), alors que l'ailette (18b) ne permet la rotation dans le sens des aiguilles d'une montre que de la première languette (16b) de ladite deuxième bague (6), et
empêche la rotation de la seconde languette (17b) de ladite troisième bague (12), à la fois dans la condition relevée et dans la condition abaissée.

10. Dispositif selon la revendication 9, **caractérisé en ce qu'**une fois que ladite première bague (4) a été insérée au niveau dudit adaptateur (3) de sorte que les première et seconde languettes sont mutuellement superposées, une rotation successive communiquée à ladite première bague (4) est suivie par la mise en prise desdites premières languettes (16a, 16b) avec ledit adaptateur (3), de sorte que l'extraction axiale dudit dispositif est empêchée, ladite troisième bague (12) restant dans sa position jusqu'à ce que lesdites pattes (14a, 14b) sont positionnées au niveau desdites secondes languettes (17a, 17b) de ladite troisième bague (12) sur-jacente, qui devient ainsi libre de se déplacer axialement et par conséquent de descendre, en étant également poussée par ledit premier joint (10), de sorte que lesdites secondes languettes (17a, 17b) mettent en prise de manière sélective lesdits moyens de couplage constitués par lesdites pattes (14a, 14b).

11. Dispositif selon la revendication 9, **caractérisé en ce que** toute autre rotation supplémentaire communiquée à ladite première bague (4) et simulant la tentative de découpler ledit dispositif (2) dudit adaptateur (3) et par conséquent son extraction, est empêchée, étant donné que le bord desdites secondes languettes (17a, 17b) interagit avec lesdites ailettes (18a et 18b) adjacentes dudit adaptateur (3), qui empêchent donc la rotation de ladite deuxième bague (6) pour empêcher l'extraction axiale dudit dispositif.
